# EUROPEAN PATENT APPLICATION

(11) **EP 0 592 701 A1**
(43) Date of publication of application: **20.04.1994**
(21) Application number: 92117398.5
(22) Date of filing: 12.10.1992
(51) Int. Cl.: A61C 8/00

(54) **Dental implant**

(71) Applicant: NAUCHNO-PROIZVODSTENNOE OBIEDINENIE " EKRAN", Moscow 129301 (RU)
(72) Inventor: Krivov, Konstantin Ivanovich, Moscow (RU); Leonov, Boris Ivanovich, Moscow (RU)
(74) Representative: Patentanwälte Beetz - Timpe - Siegfried Schmitt-Fumian - Mayr

(57) **Abstract**

The invention relates to medicine. The dental implant is comprised of a root portion (1) in the form of a cylinder with a screw thread (2) on its side surface, and a head (3) secured to one end of the cylinder and adapted to receive and hold the artificial tooth. The free end of the cylinder according to the invention, has a flexible member (7). The latter is made in the cylinder body in the form of two parallel slits (8, 9) whose depth exceeds the cylinder radius. The slits are oriented square to the cylinder axis and their internal side surfaces (10,11) are perpendicular to each other.

The dental implant is designed to serve as an artificial tooth root.

## Description

The present invention relates to medicine, i.e. stomatology and, more particularly, to a dental implant constituted by an artificial tooth root implanted into a jaw bone and fixing an artificial tooth therein.

Known in the prior art is a dental implant (EP, A₂, 0282789) comprising a root portion in the form a cylindrical support with a self-cutting thread on its side surface. One end of said cylindrical support has an adapter with internal thread for screwing in a head suitable for fixing such stomatological structures as an artificial tooth or bridge denture.

The opposite end of the cylindrical root portion has a pointed conical shape.

The known implant is installed by screwing it into a cavity in the patient's jaw bone, the diameter of this cavity being smaller than the outside diameter of the self-cutting thread. Screwing-in of such an implant calls for applying a considerable force to the head spline which may bring about unwanted mechanical deformations in the zone of -the head-to-adapter screw joint where the force is transmitted from the head spline to the cylindrical head through rather thin walls of the adapter.

Besides, this structure has no channels for discharging the particles of the bone tissue destroyed by screwing in the root portion. These particles deform the adjacent layers of the bone tissue and form a compacted layer around the implant which may lead to resorption of bone tissue.

Close interaction of the solid bone tissue with the outside surface of the implant during rotation of the latter does not exclude the possibility of heating the bone tissue above 41°C since there is no cooling. This may lead to rejection of the implant.

The end of the implant root portion has the form of a cone whose outside surface has cutting edges so that the implant of the known design installed into the jaw bone cavity is tight against the cavity walls and rigidly connected therewith. This rules out the possibility of microscopic motions of the implant with the relation of the jaw bone, such motions being peculiar to the root of a natural tooth. Absence of such microscopic motions of the implant cuts down its reliability and service life under the effect of the masticating force which may run as high as 350 kg.

There is another known dental implant (De, A, 0139253) whose root portion, as distinct from the above-described embodiment, has the shape of a hollow cylinder with a plurality of through holes in its side wall. The free end of the cylinder is circular.

To install the implant, first a mounting seat is prepared in the patient's jaw bone with an additional cutting tool. This seat has the form of a circular cavity matching the dimensions of the hollow cylinder. This additional cutting tool is provided with a means for discharging the particles of destroyed bone tissue, and a cooling means. The implant is fitted easily into the prepared circular space and, some time later, it gets fixed in the jaw bone cacity because the fibers of periodontium grow through the holes in the wall of the hollow cylinder.

However, by virtue of the fact that the end surface of the root portion of the implant has but a small surface area, it is subjected to heavy forces in operation. In absence of damping along the vertical axis of the implant the root portion gradually sinks into the jaw bone tissues.

Besides, a column of solid bone tissue in the cyvity of the implant root portion limits substantially the natural microscopic movements of said portion.

Lastly, there is a known dental implant (see, for example, "Products Catalog" Nobelpharma, Sweden, 1987) comprising a root portion in the form of a cylinder with screw thread on its side surface, and a head secured to the end of the cylinder and adapted for receiving the fixing an artificial tooth. The other end of the cylinder is flat. A through hole in the cylinder body near said flat end is perpendicular to, and intersects, the cylinder axis.

Before fixing the implant, a mounting seat is likewise prepared preliminarily in the patient's jaw bone using an additional cutting tool. However, as distinct from the preceding example, the mounting seat has the form of a cylindrical cavity which is by far easier to make than the circular cavity. After installation, the implant is reliably secured in the jaw bone because the periodontium fibers grow through the hole near the free end of the root portion. This method of fixing the implant ensures, additionally, a certain freedom of movement in the buccolingual direction. At the same time, the given design of the implant ensures its rigid fixing in the jaw bone in the direction of the vertical axis (longitudinal axis of the cylinder) in which the component of the masticating force is largest. This is detrimental to the reliability and durability of the known implant.

The main object of the invention resides in providing a dental implant whose design would enable its root portion to execute microscopic motions in the jaw bone both along the axis of the root portion and a long the distal-proximal and buccolingual directions, similar to microscopic motions of the natural tooth root, thus extending the life of the implant and bringing its characteristics close to those of a natural tooth.

This object is attained by providing a dental implant comprising a root portion in the form of a cylinder with screw thread on its side surface, and a head secured to the end of the cylinder and adapted for receiving and fixing an artificial tooth wherein, according to the invention, the free end of the cylinder is fitted with a flexible member.

It is practicable that the flexible member should have the form of two parallel slits in the cylinder body, so that the depth of said slits exceeds the cylinder radius, the slits are oriented square to the cylinder axia and their internal side surfaces are perpendicular to each other.

Apart from that, the flexible member may be made in the form of a flexible rod provided with circular elastic profjections and installed on the end of the cylinder, coaxially therewith.

Provision of a flexible member in the root portion of the dental implant according to the invention enables said implant to execute microscopic motions similar to the natural motions in the patient's jaw bone in the buccolingual, distal-proximal and vertical directions, and to make microscopic rotary motions around the longitudinal axis. The implant is easy to manufacture and install and is noted for a long service life.

Now the invention wilt be elucidated by describing its concrete embodiments with reference to the appended drawings in which:
Fig. 1 is an isometric view of the dental implant according to the invention;
Fig. 2 is fragment A in Fig. 1 with a flexible member in the form of a spring;
Fig. 3 - same as in Fig. 2 with a flexible member in the form of a detachable rod with projections of an elastic material.

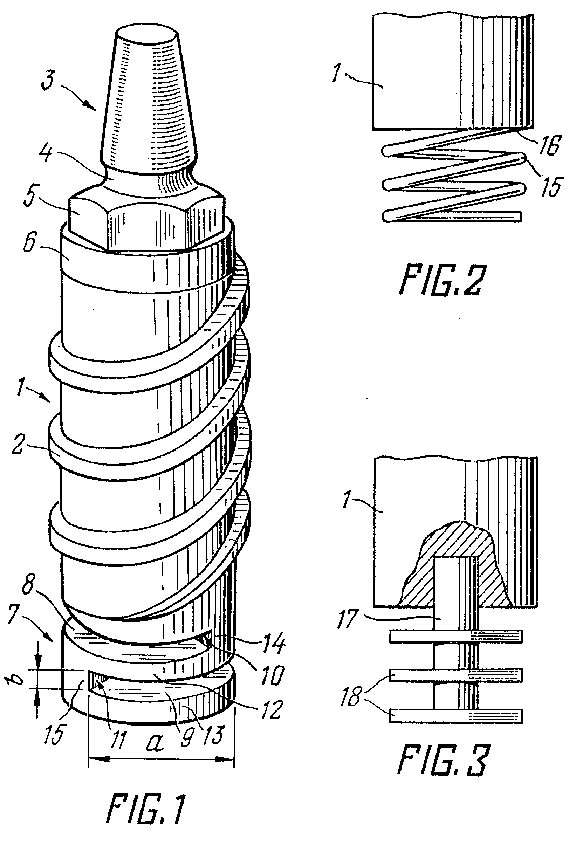

The dental implant according to the invention (Fig. 1) comprises a root portion 1 in the form of a cylinder with a screw thread 2 on its side surface. Secured to one end of the cylindrical root portion 1 (in this case by a screw joint), is a head 3 which is shaped like a truncated cone and has a neck 4 under its larger lower base to enhance the cohesion between the head 3 and the artificial tooth in the course of its installation. Arranged immediately under the neck 4 are a nut 5 for the stomatological wrench, and a cylindrical base 6 made integral with the upper conical portion, the diameter of the base 6 being equal to that of the cylindrical portion.

The opposite end of the cylindrical root portion 1 is provided with a flexible member 7 which, in this particular embodiment, has the form of two parallel slits 8, 9 in the cylinder body, oriented square to the cylinder axis with their internal side surfaces 10, 11 perpendicular to each other. The depth "a" of the slits 8, 9 exceeds the radius of the cylindrical root portion 1 while their height "b" is selected (taking in account the stiffness of the implant material) to be sufficient to endow the free end of the root portion 1 with a capability to be flexibly defored under the force of mastication. For example, in the case of a titanium implant with a 4-mm radius of its root portion the values of "a" and "b" may be 3 mm and 1 mm, respectively.

The two plates 12, 13 formed on the end of the root portion by slits 8, 9 and linked with the cylinder by connectors 14, 15, respectively, are, in essence, flat springs.

The flexible member in the embodiment shown in Fig. 2 is constituted by a compression coil spring 15 which is arranged coaxially with the cylindrical portion 1 and connected by its end 16 with the end of said cylindrical portion. The outside diameter of the spring 15 does not exceed the diameter of the root portion 1. The spring 15 is made of a biologically inert material, for example platinum or titanium wire.

Illustrated in Fig. 3 is still another embodiment of the dental implant according to the invention where, unlike the abovementioned embodiments, the flexible member has the form of a rod 17 fitted with three circular projections 18 and installed in a socket provided for this purpose in the end of the root portion 1. The rod 17 is made integral with the projections 18 of a biologically-inert material, e.g. silicon rubber, and is installed in the socket with a possibility for being taken out and replaced with another one. The diameter of the rings 18 does not exceed the diameter of the cylindrical root portion 1.

The dental implant according to the invention, shown in Fig. 1, is installed as follows.

First, a hole in the patient's jaw bone is made with a drill of an appropriate diameter. The depth of this hole is equal to the length of the root portion 1. Then a thread corresponding to the screw thread 2 is tapped in the wall of said hole and the implant is screwed in, first with an auxiliary head.

Gradually, the periodontium grown up and its fibers oriented horizontally in the zone of the flexible member 7 extend and fill up the space of the slits 8, 9 thereby fastening reliably the root portion 1 of the implant to the jaw bone tissues of the patient. At the same time, by virtue of the damping properties of periodontium and the flexible properties of flat springs, i.e. plates 12, 13 secured to the root portion 1 by connectors 14, 15 offset by 90° from each other, the implant can execute nicroscopic motions similar to the natural microscopic motions in three relatively-perpendicular directions, viz.: vertical, buccolingual and distal-proximal directions, and microscopic rotary motions around the vertical axis. At the second stage the auxiliary head is replaced by a working head 3 to which the dental implant is subsequently secured.

The versions of the dental implant illustrated in Figs. 1 and 2 are used in the same manner as described with reference to Fig. 1, the sole difference being in that the fibers of the growing periodontium fill up the internal space of the spring 16 (Fig. 2) or the gaps between the circular projections 18 (Fig. 3).

The internal space in the flexible member permits putting in a medicinal drug before installation of the implant. Said drug stimulates regeneration of the bone tissue in the course of implant grafting.

## Claims

1. A dental implant comprising a root portion (1) in the form of a cylinder with a screw thread (2) on its side surface and a head (3) adapted for receiving the fixing an artifical too CHARACTERIZED in that the free end of the cylinder is provided with a flexible member (7).

2. A dental implant of Claim 1 CHARACTERIZED in that the flexible member (7) has the form of two parallel slits (8, 9) in the cylinder body, the depth (a) of the slit exceeding the cylinder radius and the slits are oriented square to the cylinder axis to that their side surfaces (10, 11) are perpendicular to each other.

3. A dental implant of Claim 1 CHARACTERIZED in that the flexible member has the form of a rod (17) provided with circular projections (18) of an elastic material and installed in the end of the cylinder, coaxially therewith.

4. A dental implant of claim 1 CHARACTERIZED in that the flexible member is constituted by a coil spring (15) secured on the free end of the cylinder, coaxially therewith.
